# EUROPÄISCHE PATENTANMELDUNG

(11) **EP 1 892 140 A2**
(43) Veröffentlichungstag der Anmeldung: **27.02.2008**
(21) Anmeldenummer: 07015842.3
(22) Anmeldetag: 11.08.2007
(51) Int. Cl.: B60K 23/02

(54) **Baueinheit und Verfahren zur Montage einer Baueinheit aus einem Pedal und einem Hydraulikzylinder für ein Kraftfahrzeug**

(30) Priorität: 23.08.2006 DE 102006039526
(71) Anmelder: ZF Friedrichshafen AG, 88038 Friedrichshafen (DE)
(72) Erfinder: Riess, Thomas, 97437 Hassfurt (DE); Gebauer, Dieter, 97502 Obbach (DE)

(57) **Zusammenfassung**

Es wird eine Baueinheit (10) aus einem Pedal (12) und einem Hydraulikzylinder (14) für ein Kraftfahrzeug beschrieben, wobei das Pedal (12) und der Hydraulikzylinder (14) zur zumindest mittelbaren Festlegung an einem Chassis eines Kraftfahrzeuges vorgesehen oder dort festgelegt sind und wobei das Pedal in einer Verschwenkebene um eine Achse (16) verschwenkbar ist und der Hydraulikzylinder (14) zu dem Pedal (12) lagegesichert festgelegt ist. Bei dieser Baueinheit (10) wirkt das Pedal (12) mit einem Übertragungselement zusammen, das eine auf das Pedal (12) eingeleitete Betätigungskraft im Wesentlichen innerhalb der Verschwenkebene auf einen mit diesem wirkverbundenen Kolben (26) des Hydraulikzylinders (14) übertragen kann.

Es wird zur Erleichterung der Montage vorgeschlagen, dass das Pedal (12) und/oder das Übertragungselement einen Zwangsführungsbereich (42) zur Zwangsführung des jeweils anderen Wirkpartners (12;24) innerhalb der Verschwenkebene des Pedals (12) umfasst und dass das Pedal (12) und/oder das Übertragungselement (24) weiterhin einen Arretierungsabschnitt (44) aufweist, an dem der jeweils andere Wirkpartner (12;24) bei einer Zwangsführung selbstarretierend in Eingriff gebracht werden kann und wobei dieser Wirkpartner (12,24) an dem Arretierungsabschnitt (44) verschwenkbeweglich und im Wesentlichen spielfrei lagegesichert festgelegt ist.

## Beschreibung

Die Erfindung betrifft eine Baueinheit aus einem Pedal und einem Hydraulikzylinder für ein Kraftfahrzeug gemäß dem Oberbegriff des Patentanspruchs 1 und ein Verfahren zur Montage einer solchen Baueinheit an einem Fahrzeug.

Eine solche Baueinheit, insbesondere zur Betätigung einer Fahrzeugkupplung, ist in der DE 37 31 118 A1 offenbart, wobei das dem Kolben des Hydraulikzylinders abgewandte Ende des Übertragungselementes, in diesem Fall der Kolbenstange, ein Lagerauge aufweist, welches von einem am Kupplungspedal festgelegten und von dessen Verschwenkebene herausstehenden Bolzen durchdrungen und mittels eines Sicherungsringes axial unverschiebbar gehalten ist.

Es sind weiterhin Fahrzeuge bekannt, bei denen der seitlich vom Pedal abstehende Bolzen einen Kugelkopf aufweist und wo anstelle des Sicherungsringes eine Einweg-Rastverbindung zur axialen Fixierung des Übertragungselementes vorgesehen ist und wobei das Übertragungselement manuell auf den Kugelkopf aufgeschnappt wird.

Es besteht bei der Montage eines Pedals mit einem Hydraulikzylinder unmittelbar an einem Fahrzeug generell das Problem, dass sich der Montageort im nicht oder nur sehr begrenzt einsehbaren Fußraum eines Fahrzeugs befindet, so dass eine Sichtkontrolle zumeist nicht möglich ist und die zu montierenden Elemente lediglich ertastet werden können. Ein derartiger Montagevorgang ist zeitaufwändig und erfordert zudem erfahrenes und geschicktes Montagepersonal. Des Weiteren können Montagefehler auftreten, welche eine wiederholte Montage erforderlich machen, die Zeit und Kosten beansprucht. Es besteht die Forderung, dass die Montage leichtgängig, d.h. mit einem möglichst geringen manuellen Kraftaufwand erfolgen soll. Andererseits soll die Verbindungsstelle von Pedal und Übertragungselement hohe Haltekräfte aufweisen, um ein unbeabsichtigtes Lösen zu verhindern. Die Montage der bekannten Rastverbindung erfordert dagegen einen sehr hohen Krafteinsatz, der z.B. bei der Fließbandfertigung beim Montagepersonal zu Ermüdungserscheinungen und zu Montagefehlern führen kann.

Die Erfindung stellt sich von den erläuterten Problemen ausgehend die Aufgabe, eine Baueinheit aus einem Pedal und einem Hydraulikzylinder für ein Kraftfahrzeug bereitzustellen, die einerseits leicht montierbar ist und zugleich hohe Haltekräfte ermöglicht. Des Weiteren soll ein Verfahren zur Montage einer solchen Baueinheit dargestellt werden.

Die genannte Aufgabe wird gemäß dem ersten Aspekt durch eine gattungsgemäße Baueinheit mit den kennzeichnenden Merkmalen des Patentanspruchs 1 und gemäß dem zweiten Aspekt durch ein Verfahren gemäß dem Patentanspruch 9 gelöst.

Bei der Baueinheit kann es sich vorzugsweise um eine Betätigungseinrichtung für eine Bremse oder eine Kupplung eines Kraftfahrzeugs handeln. Erfindungsgemäß weist das Pedal oder das Übertragungselement zur Montage der Baueinheit einen Zwangsführungsbereich zur Zwangsführung des jeweils anderen Wirkpartners innerhalb der Verschwenkebene des Pedals auf. Durch das Vorsehen eines Zwangsführungsbereiches können die in Eingriff zu bringenden Elemente zunächst zueinander in einem lediglich losen gegenseitiger Eingriff gebracht und vorpositioniert werden, ohne dabei gleichzeitig die vorgesehene exakte Montageendlage einzunehmen. Im Rahmen der Zwangsführung kann die gegenseitige Bewegung z.B. entlang einer Geraden oder einer gekrümmten Kurve innerhalb der Verschwenkebene des Pedals erfolgen.

Zur endgültigen gegenseitigen Lagefestlegung des Pedals zu dem Übertragungselement ist an dem Pedal und/oder dem Übertragungselement ein Arretierungsabschnitt vorgesehen, den der jeweils andere Wirkpartner im Verlauf der erzwungenen gerichteten Bewegung ansteuert und an dem beide Wirkpartner selbsttätig und selbstarretierend in einen Arretierungseingriff gelangen. An diesem Arretierungsabschnitt sind das Pedal und das Übertragungselement ausschließlich verschwenkbeweglich und im Wesentlichen spielfrei zueinander lagegesichert festgelegt.

Das Verfahren zur Montage der erfindungsgemäßen Baueinheit gemäß Patentanspruch 9 sieht vor, dass in einem ersten Schritt das Pedal und der Hydraulikzylinder an einem Fahrzeugchassis oder an einem Träger festgelegt werden, in einem zweiten Schritt das Übertragungselement manuell mit dem Koppelelement in dem Zwangsführungsbereich in Eingriff gebracht wird und dass in einem dritten Schritt das Pedal betätigt wird, wobei durch eine dabei erfolgende gegenseitige Translationsbewegung die Elemente den Zwangsführungsbereich passieren und in dem Arretierungsabschnitt in Eingriff gelangen.

Bei dem Träger kann es sich bspw. um eine Montagebasis eines Fußhebelwerkes handeln, an dem sowohl der Hydraulikzylinder als auch das Pedal festegelegt werden und welches dann als Einheit mit dem Chassis eines Fahrzeuges verbuden wird.

Das Montageverfahren erlaubt durch die selbsttätige Einnahme des Arretierungseingriffs eine werkzeugfreie Montage, wobei die manuell aufzubringende Montagekraft infolge der Ausnutzung der wirkenden Pedalübersetzung relativ gering ist. Wenn die zur Montage erforderliche Kraft bspw. 400N beträgt, so sind bei einer Pedalübersetzung von 4:1 lediglich 100N von einem Monteur aufzubringen.

Vorteilhafte Weiterbildungen und Ausgestaltungen der Erfindung sind in den abhängigen Ansprüchen 2-8 angegeben.

Der Zwangsführungsbereich und der Arretierungsabschnitt können am Pedal und am Übertragungselement räumlich getrennt oder aber vorteilhaft räumlich benachbart innerhalb der Verschwenkebene des Pedals zueinander ausgebildet sein. im letzten Fall wird bei der Montage von einem der Wirkpartner zunächst der Zwangsführungsbereich passiert und darauf folgend wird dieser Wirkpartner im Arretierungsbereich arretiert.

Gemäß einer vorteilhaften Ausgestaltung der Erfindung weist das Pedal ein von der Verschwenkebene abstehend, insbesondere rechtwinklig abstehend, ausgebildetes Koppelelement auf und der Zwangsführungsbereich ist an dem Übertragungselement durch eine sich längs des Hydraulikzylinders erstreckende Führungsnut ausgebildet. In diese Führungsnut kann das Koppelelement eingreifen und wird dort insbesondere innerhalb der Verschwenkebene des Pedals zwangsgeführt. Die Führungsnut kann in einer zu der Erstreckungsrichtung senkrechten Richtung Spielzwischenräume aufweisen Das Koppelelement kann vorteilhafterweise als zylindrischer Bolzen z.B. mit Kugelkopf oder mit einer Nut ausgebildet sein. Die Führungsnut weist bevorzugt einen hinterschnittenen Bereich auf, der von dem Koppelelement hintergriffen wird.

Zusätzlich ist es von Vorteil, wenn der Zwangsführungsbereich zumindest in einem erweiterten, bspw. trichterförmigen Einführbereich in einer zu der Verschwenkebene senkrechten Ebene einen begrenzten Spielraum für den anderen Wirkungspartner bereitstellt. Die Vorpositionierung ist durch diese Ausgestaltungsmaßnahmen sehr einfach und kann ohne besondere Anforderungen an die Kraft und die Geschicklichkeit eines Montagepersonals erfolgen.

Der an dem Pedal oder dem Übertragungselement vorgesehene Arretierungsabschnitt umfasst elastisch verformbare Rastmittel und eine Gegenanlagefläche für das Koppelelement, wodurch die Endlage der Wirkpartner durch deren gegenseitige Verrastung einfach und ohne den Einsatz eines Montagewerkzeugs eingenommen werden kann. Die Rastverbindung ist dabei selbsthemmend ausgeführt, so dass das Pedal und das Übertragungselement im montierten Zustand verschwenkbar jedoch ansonsten zueinander lagegesichert festgelegt sind. Versuche der Anmelderin haben gezeigt, dass eine solche Rastverbindung eine Haltekraft von ca. 3000N aufbringen kann, welche damit um einen Faktor 30 größer ist als die manuell aufzubringende Montagekraft. Damit kann ein unbeabsichtigtes Lösen der Verbindung bei bestimmungsgemäßen Gebrauch der Baueinheit ausgeschlossen werden. Im Servicefall gestaltet sich die Demontage der Baueinheit dennoch einfach, da es unter Verwendung von Standardwerkzeugen leicht möglich ist, die Rastmittel aufzuspreizen und das Koppelelement gemeinsam mit dem Werkzeug aus der Führungsnut herauszuführen bzw. das Übertragungselement von dem Koppelelement abzuziehen.

In besonders vorteilhaften Weise können sich die Rastmittel bei der Montage bei Erreichen des Arretierungsabschnittes vorgespannt und akustisch wahrnehmbar an das Koppelelement anlegen, so dass zusätzlich zu einer beim Einrasten spürbaren Änderung, d.h. Sprung im Montagekraftverlauf für einen Monteur ein akustisches Signal in Form eines markanten Schnappgeräusches für die erreichte Montageendlage der Wirkpartner auftritt. Das Schnappgeräusch kann insbesondere durch die Vorspannung der Rastmittel und durch die Auswahl geeigneter Werkstoffe optimiert werden.

Auch diese Maßnahme erhöht die Montagesicherheit.

Das Übertragungselement kann einteilig als Stößel bzw. Kolbenstange des Hydraulikzylinders ausgeführt sein. Es kann jedoch auch vorteilhaft sein, das Übertragungselement mehrteilig auszuführen, wobei dieses einen mit dem Kolben zusammenwirkenden Stößel und eine mit dem Koppelelement und dem Stößel zusammenwirkende Adapterstange umfasst. In diesem Fall kann für unterschiedliche Anwendungsfälle ein Standardzylinder inklusive Stößel mit einer für den jeweiligen Anwendungsfall optimierten Adapterstange verwendet werden.

In vorteilhafter Weise sind zur Ausbildung einer gewichtsoptimierten Baueinheit zumindest der Zwangsführungsbereich und der Arretierungsabschnitt an dem Pedal und/oder dem Übertragungselement aus einem Kunststoff gefertigt, bspw. einem glasfaserverstärkten Polyamidwerkstoff.

Nachfolgend wird die Erfindung anhand der beigefügten Figuren beispielhaft beschrieben. Es zeigen:
- Fig. 1 a-c: eine Baueinheit aus einem Pedal und einem Hydraulikzylinder, die mittels eines Übertragungselementes wirkverbunden sind;
- Fig. 2a-c: ein Übertragungselement gemäß Fig. 1 a-c in einer vergrößerten Darstellung mit einem Zwangsführungsbereich und einem Arretierungsabschnitt.

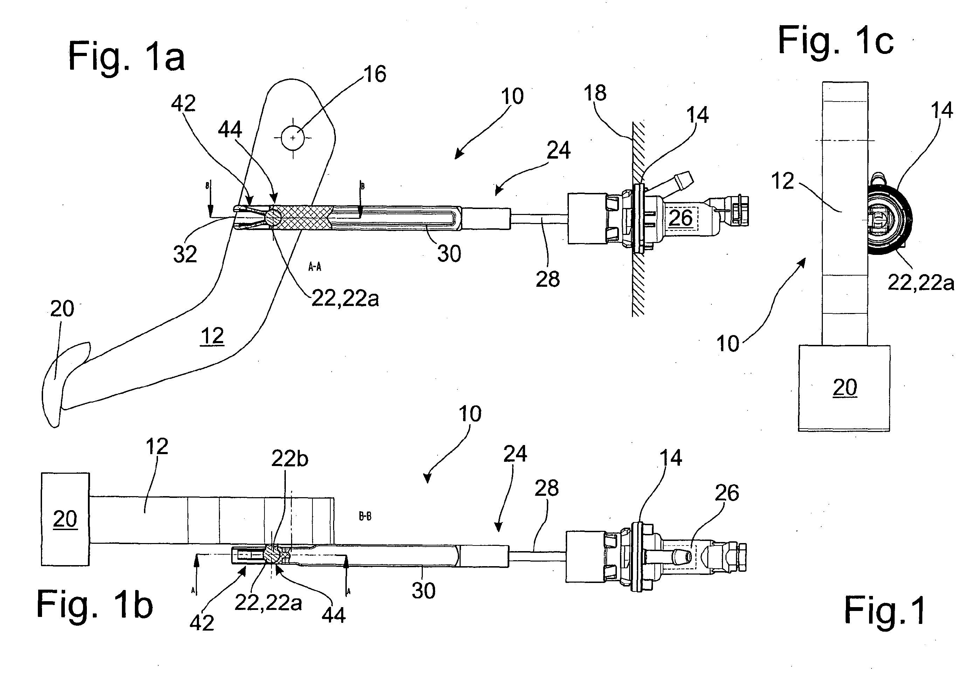

Die Fig. 1 a-c zeigen eine zur Betätigung einer Fahrzeugkupplung vorgesehene Baueinheit 10 aus einem Pedal 12 und einem Hydraulikzylinder 14, wobei das Pedal 12 in einer Verschwenkebene um eine fahrzeugfeste Achse 16 verschwenkbar und der Hydraulikzylinder 14 lagegesichert an einem Chassis 18 des Kraftfahrzeugs festgelegt sind. Das Pedal 12 trägt zwischen der Drehachse 16 und einer Pedalplatte 20 einen seitlich aus der Verschwenkebene herausstehenden Kugelkopfbolzen 22, der als Koppelelement 22 für ein Übertragungselement 24 dient, welches eine auf das Pedal 12 eingeleitete Betätigungskraft im Wesentlichen innerhalb der Verschwenkebene auf einen innerhalb des Hydraulikzylinders 14 geführten und in der Fig. 1a gestrichelt angedeuteten Kolben 26 überträgt. Der Hydraulikzylinder 14 fungiert als Geberzylinder einer hydraulischen Übertragungsstrecke und steuert über eine zeichnerisch nicht dargestellte Druckmittelleitung einen hydraulischen Nehmerzylinder an, welcher wiederum über einen Kupplungsausrücker an einem Betätigungsorgan einer Fahrzeugkupplung angreifen kann.

Das Übertragungselement 24 ist im vorliegenden Beispiel zweiteilig ausgeführt und umfasst zunächst einen mit dem Kolben 26 zusammenwirkenden Stößel 28 und eine mit dem Koppelelement 22 und dem Stößel 28 zusammenwirkende Adapterstange 30, die aus einem glasfaserverstärktem Polyamidwerkstoff gefertigt ist und in dem dem Pedal abgwandten Endbereich ein axiales Sackloch zur Aufnahme des Stößels 28 aufweist.

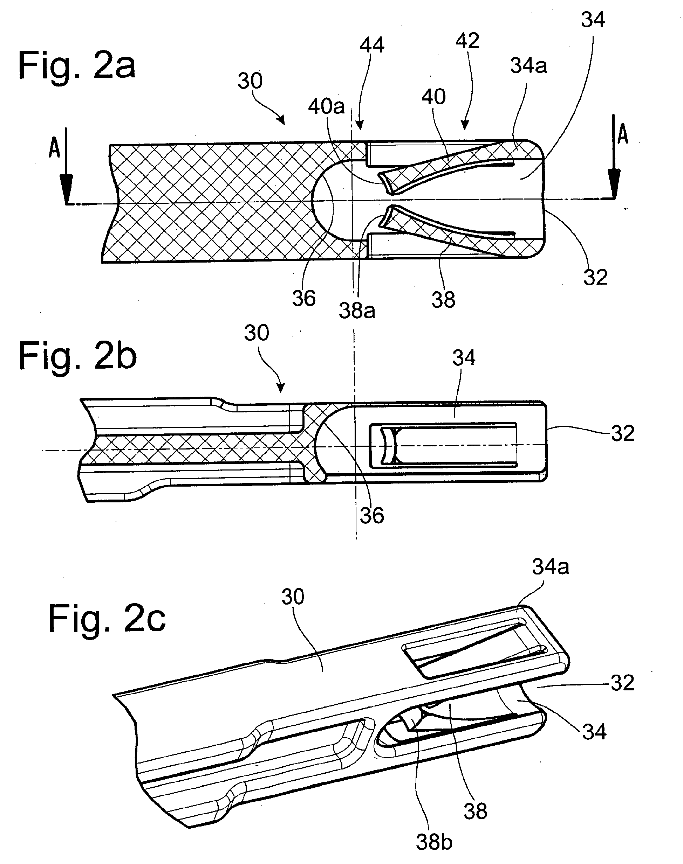

In den Fig. 2a-c ist der mit dem Koppelelement 22 zusammenwirkende Endbereich der Adapterstange 30 vergrößert dargestellt. Es ist erkennbar, dass die Adapterstange 30 einen stirnseitigen Einführbereich 32 in Form einer Einführöffnung 32 und eine zum Pedal 12 weisende einseitig offene, sich an der Adapterstange 30 in Längsrichtung, d.h. in Betätigungsrichtung des Hydraulikzylinders 14 erstreckende Führungsnut 34 zur Aufnahme und Führung des Kugelkopfes 22a des Kugelkopfbolzens 22 aufweist. Diese Führungsnut 34 stellt einen Zwangsführungsbereich 42 dar und ermöglicht bei der Montage der Baueinheit 10 zunächst eine gegenseitige Vorpositionierung von Pedal 12 und Adapterstange 30 und im weiteren Verlauf der Montage eine lineare Zwangsführung des Kugelkopfes 22a relativ zu der Adapterstange 30 innerhalb der Verschwenkebene des Pedals 12. Zur Einschränkung der Bewegungsfreiheit wird der Kugelkopfbolzen 22 bis auf dessen Schaftbereich 22b von der Führungsnut 34 umgriffen, so dass für das Übertragungselement 24 eine aus der Bildebene der Fig. 1 a herausgerichtete Bewegung im Wesentlichen unterbunden ist.

Alternativ zu dem mit den Fig. 1 a-c und 2a-c erläuterten Ausführungsbeispiel kann die Führungsnut 34 bzw. der Zwangsführungsbereich 42 innerhalb der Verschwenkebene des Pedals 12 bspw. auch als gekrümmte Bahn oder als eine gegenüber der Erstreckungsrichtung des Hydraulikzylinders abgewinkelte Bahn ausgebildet sein.

Es ist weiter erkennbar, dass die Führungsnut 34 an dem der Einführöffnung 32 gegenüberliegenden Endbereich durch eine Gegenanlagefläche 36 begrenzt wird. Diese Gegenanlagefläche 36 definiert gemeinsam mit den freien Enden 38a, 40a von zwei elastisch verformbaren Rastzungen 38, 40 einen Arretierungsabschnitt 44, in den der Kugelkopf 22a bei einer Bewegung in der Führungsnut 34 hineingleiten kann. Die elastischen Rastzungen 38, 40 gehen von der Wandung 34a der Führungsnut 34 im Bereich der Einführöffnung 32 aus und ragen in die Führungsnut 34 hinein. Bei einer Bewegung des Kugelkopfes 22 in Richtung des Arretierungsabschnittes 44 werden die Rastzungen 38, 40 nach außen aufgespreizt und schnappen nach dessen Passieren und beim Erreichen der Gegenanlagefläche 36 akustisch wahrnehmbar zurück, um sich unter Vorspannung an den Kugelkopf 22 anzulegen. Zur Erzielung einer möglichst großen Selbsthemmung der Rastverbindung erstrecken sich dabei die Rastzungen 38, 40 günstigerweise in einer Radialrichtung des Kugelkopfes 22a. In der in Fig. 1 dargestellten Montage-Endlage ist der Kugelkopf 22a lediglich innerhalb der Verschwenkebene des Pedals 12 verschwenkbeweglich und ansonsten im Wesentlichen spielfrei lagegesichert an dem Pedal 12 festgelegt.

Der Zwangsführungsbereich 42 ist, wie aus den Figuren ersichtlich, räumlich benachbart und innerhalb der Verschwenkebene des Pedals 12 zu dem Arretierungsabschnitt 44 angeordnet, so dass der zwangsgeführte Kugelkopf 22a bei der Montage in den Arretierungsabschnitt 44 hineingleiten kann, dort selbsttätig verrastet und lagegesichert festgelegt wird. Die Größe der Einführöffnung 32 entspricht im Beispiel dem Querschnitt der Führungsnut 34. Eine noch weiter vereinfachte Montage ergibt sich, wenn der Zwangsführungsbereich 42 einen gegenüber der Führungsnut 34 einseitig erweiterten z.B. trichterförmigen Einführbereich 32 für das Koppelelement 22 aufweist.

Zur Montage der vorstehend beschriebenen Baueinheit 10 aus dem Pedal 12 und dem Hydraulikzylinder 14 für ein Kraftfahrzeug werden in einem ersten Schritt das Pedal 12 und der Hydraulikzylinder 14 an einem Fahrzeugchassis festgelegt. In einem zweiten Schritt wird das Übertragungselement 24, d.h. im vorliegenden Beispiel die Adapterstange 30 manuell mit dem Koppelelement 22 in dem Zwangsführungsbereich 32, 42 in Eingriff gebracht und in einem dritten Schritt wird das Pedal 12 betätigt, wobei der Kugelkopf 22a durch eine dabei erfolgende gegenseitige Translationsbewegung die Führungsnut 34 passiert und selbsttätig in dem Arretierungsabschnitt 44 verrastet wird. Wie bereits erwähnt, können das Pedal und der Hydraulikzylinder auch in der soeben beschriebenen Weise gemeinsam an einem Fußhebelwerk vormontiert werden, welches in einem weiteren Schritt an einem Fahrzeugchassis montiert wird.

### Bezugszeichenliste

- 10: Baueinheit
- 12: Pedal
- 14: Hydraulikzylinder
- 16: Achse
- 18: Chassis
- 20: Pedalplatte
- 22: Kugelkopfbolzen, Koppelelement
- 22a: Kugelkopf
- 22b: Schaft
- 24: Übertragungselement
- 26: Kolben
- 28: Stößel
- 30: Adapterstange
- 32: Einführbereich, Einführöffnung
- 34: Führungsnut
- 34a: Nutwandung
- 36: Gegenanlagefläche
- 38, 40: Rastzunge
- 38a, 40a: Rastzungenende
- 42: Zwangsführungsbereich
- 44: Arretierungsabschnitt

## Patentansprüche

1. Baueinheit (10) aus einem. Pedal (12) und einem Hydraulikzylinder (14) für ein Kraftfahrzeug, wobei
- das Pedal (12) und der Hydraulikzylinder (14) zur zumindest mittelbaren Festlegung an einem Chassis eines Kraftfahrzeuges vorgesehen oder dort festgelegt sind,
- das Pedal (12) in einer Verschwenkebene um eine Achse (16) verschwenkbar ist und
- der Hydraulikzylinder (14) zu dem Pedal (12) lagegesichert festgelegt ist, wobei
- das Pedal (12) mit einem Übertragungselement (24) zusammenwirkt, das eine auf das Pedal (12) eingeleitete Betätigungskraft im Wesentlichen innerhalb der Verschwenkebene auf einen mit diesem wirkverbundenen Kolben (26) des Hydraulikzylinders (14) überträgt,
**dadurch gekennzeichnet,**
**dass** zur Montage der Baueinheit (10) das Pedal (12) und/oder das Übertragungselement (24) einen Zwangsführungsbereich (42) zur Zwangsführung des jeweils anderen Wirkpartners (12; 24) innerhalb der Verschwenkebene des Pedals (12) aufweist und wobei das Pedal (12) und/oder das Übertragungselement (24) einen Arretierungsabschnitt (44) umfasst, an dem der jeweils andere Wirkpartner (12; 24) bei einer Zwangsführung selbstarretierend in Eingriff gebracht werden kann und wobei dieser Wirkpartner (12, 24) an dem Arretierungsabschnitt (44) verschwenkbeweglich und im Wesentlichen spielfrei lagegesichert festgelegt ist.

2. Baueinheit nach Anspruch 1,
**dadurch gekennzeichnet,**
**dass** der Arretierungsabschnitt (44) räumlich benachbart und innerhalb der Verschwenkebene des Pedals (12) zu dem Zwangsführungsbereich (42) angeordnet ist.

3. Baueinheit nach Anspruch 1 oder 2,
**dadurch gekennzeichnet,**
**dass** das Pedal (12) ein von der Verschwenkebene abstehend ausgebildetes Koppelelement (22) aufweist und der Zwangsführungsbereich (42) an dem Übertragungselement (24) durch eine sich in Betätigungsrichtung des Hydraulikzylinders (14) erstreckende Führungsnut (34) ausgebildet ist, in die das Koppelelement (22) eingreifen kann und von der das Koppelelement (22) zwangsgeführt wird.

4. Baueinheit nach einem der vorhergehenden Ansprüche,
**dadurch gekennzeichnet,**
**dass** der Zwangsführungsbereich (42) einen erweiterten Einführbereich für das Koppelelement (22) aufweist.

5. Baueinheit nach einem der vorhergehenden Ansprüche,
**dadurch gekennzeichnet,**
**dass** der Arretierungsabschnitt (44) elastisch verformbare Rastmittel (38, 40) und eine Gegenanlagefläche (36) für das Koppelelement (22) umfasst.

6. Baueinheit nach Anspruch 5,
**dadurch gekennzeichnet,**
**dass** sich bei der Montage der Baueinheit (10) die Rastmittel (38, 40) bei Erreichen des Arretierungsabschnittes (44) vorgespannt und akustisch wahrnehmbar an das Koppelelement (22) anlegen.

7. Baueinheit nach einem der vorhergehenden Ansprüche,
**dadurch gekennzeichnet,**
**dass** das Übertragungselement (24) mehrteilig ausgeführt ist und einen mit dem Kolben (26) zusammenwirkenden Stößel (28) und eine mit dem Koppelelement (22) und dem Stößel (28) zusammenwirkende Adapterstange (30) umfasst.

8. Baueinheit nach einem der vorhergehenden Ansprüche,
**dadurch gekennzeichnet,**
**dass** zumindest der Zwangsführungsbereich (42) und der Arretierungsabschnitt (44) aus Kunststoff gefertigt sind.

9. Verfahren zur Montage einer Baueinheit (10) aus einem Pedal (12) und einem Hydraulikzylinder (14) für ein Kraftfahrzeug nach einem der vorhergehenden Ansprüche,
**dadurch gekennzeichnet,**
**dass** in einem ersten Schritt das Pedal (12) und der Hydraulikzylinder (14) an einem Fahrzeugchassis oder an einem Träger festgelegt werden, in einem zweiten Schritt das Übertragungselement (24) manuell mit dem Koppelelement (22) in dem Zwangsführungsbereich (42) in Eingriff gebracht wird und dass in einem dritten Schritt das Pedal (12) betätigt wird, wobei durch eine dabei erfolgende gegenseitige Translationsbewegung die Wirkpartner (22; 24) den Zwangsführungsbereich (42) passieren und in dem Arretierungsabschnitt (42) in Eingriff gelangen.
